# EUROPEAN PATENT SPECIFICATION

(11) **EP 3 122 210 B1**
(45) Date of publication and mention of the grant of the patent: **14.03.2018**
(21) Application number: 14721973.7
(22) Date of filing: 28.03.2014
(51) Int. Cl.: A47C 1/032

(54) **DEVICE FOR SYNCHRONIZING THE TILT OF THE BACKREST AND THE SEAT OF A CHAIR**
VORRICHTUNG ZUR SYNCHRONISIERUNG DER NEIGUNG EINER RÜCKENLEHNE UND DES SITZES EINES STUHLS
DISPOSITIF DE SYNCHRONISATION D'INCLINAISON DE DOSSIER ET DE SIÈGE DE CHAISE

(43) Date of publication of application: 01.02.2017
(73) Proprietor: Donati S.p.A., 25050 Rodengo Saiano BS (IT)
(72) Inventor: DONATI, Armando, 25050 Rodengo Saiano BS (IT)
(74) Representative: Marietti, Andrea
(86) International application number: PCT/IB2014/060263
(87) International publication number: WO 2015/145216

(56) References cited:
- EP-A1- 2 375 938
- WO-A1-92/20262
- DE-A1- 4 118 570
- US-A- 4 765 679

## Description

### FIELD OF THE INVENTION

The present invention relates to a device for synchronizing the tilt of the chair back and of the seat, of the type in which the tilt angle taken by the seat frame with respect to the horizontal line is correlated to the tilt angle taken by the respective backrest frame, due to an articulated rods kinematic system, such that the user, due to his/her own weight and leaning on the backrest, can appropriately adjust the tilt of such frames with respect to the ground simply by sitting on the chair.

### KNOWN PREVIOUS ART

It is known art realizing such a type of synchronizing device, defined in the art as "personal - weighing" or "self-weighting", ("weight-sensitive") by hinging the seat frame to a support integral with the chair base by two cranks, usually reciprocally parallel, conveniently shaped and hinged to the afore said support, such that their reciprocal rotation could cause a corresponding rotation of the seat frame relatively to the ground. The crank rotation may be caused indirectly by the rotation of the frame of the backrest, constrained to one of the cranks, or to the seat frame, by an articulated linkage.

For example, the Patent EP2375938 in the name of the Applicant describes a four-bar linkage composed of the cranks and the seat, or in any case by the seat frame. Such a solution offers a fair adjustment of the user posture, but does not allow a precise adjustment of the resistance provided by the backrest in response to the user weight applied to the seat.

In fact, in a self-weighting device, the backrest is usually kept in a vertical position, or however in a rest position, by returning means, typically elastic means. Being the seat frame in its turn kinematically linked to said elastic means, when a user weight applies a force on the seat, this causes the elastic means to be deformed.

As known, the reaction force of the elastic means is proportional to their deformation. In more detail, when the deformation of the elastic means increases with respect to the related rest position, the reaction force of the elastic means countering the mentioned deformation increases. Therefore, in this case, when the user weight causes the deformation of the elastic means to increase, the force the elastic means apply on the backrest increases, such that an increasingly greater force is required to displace it. In general, a single deformation value of the elastic means corresponds to each user weight. It is known in the art to add adjusting means for adjusting the preload of the elastic means in order to increase the system flexibility. Typically, such means comprise a knob able, through special kinematic links, to vary the preload of the elastic means when rotated by the user. In particular, such means can further change the deformation of the elastic means such as to allow, in light of the above, to customize the resistance they provide to the backrest displacement.

US 4765679 discloses a chair having a gas spring interposed between the frame of the seat and the frame of the chair.

The known art systems are not adapted to apply a precise adjustment on the preload of the elastic means, because the known mechanism causes the preload of the elastic means to be considerably changed even in response to slight operations of the knob or, generally, to slight operations of the adjusting means of the preload.

It is therefore an object of the present invention to realize a device for synchronizing the tilt of a backrest and seat of a chair, of the type wherein while the tilt angle of the backrest is increased, the corresponding raising of the front portion of the seat occurs relatively to the rear portion, that has not the drawbacks of the known art and thereby is structurally simple and easy and effective to adjust.

It is another object of the present invention to provide a device which is easy to modify during the project step and cost-effective to produce.

It is a further object of the present invention to provide a device allowing the user to precisely adjust his/her own posture with relation to his/her own weight.

### BRIEF DESCRIPTION OF THE INVENTION

The present invention achieves these and other objects by means of a device according to claim 1. Preferred aspects are set forth in the dependent claims.

According to the invention, a device for synchronizing the tilt of the backrest and of the seat of a chair, comprises a backrest frame, a seat frame and a support integral with the base of said chair, as well as at least one first crank, integral with the backrest frame. The first crank is hinged in the rear portion of the seat frame and the support. At least one second crank is hinged in the front portion of the seat frame and the support. The first crank and the second crank, together with the seat frame, form a four-bar linkage. An adjusting lever is constrained to the four-bar linkage and is operatively connected to a movable fulcrum and elastic means.

The terms "front portion" and "rear portion" refer to the orientation of the chair in use, so "rear portion" means next to the backrest, and therefore "front portion" is in the opposite position, that is next to the area assigned, for example, to the user knees. Thanks to the present invention, it is possible to precisely adjust the response of the backrest with respect to the weight applied by the seat. In fact, by displacing the movable fulcrum along the adjusting lever it is possible to slightly change the preload of the elastic means in an easy to control manner.

According to an aspect of the present invention, the movable fulcrum comprises an element sliding with respect to a respective housing, and a head for engaging the adjusting lever.

According to another aspect of the present invention, the adjusting lever is hinged to a hinge constraining the second crank to the seat frame. Preferably, such a hinge is supported by a specific supporting profile. This supporting profile is generally integral with the chair base.

Thanks to this arrangement, the preload of the elastic means can be adjusted and at the same time the seat frame can be provided with freedom of movement with respect to the chair base.

### BRIEF DESCRIPTION OF THE FIGURES

Hereinafter, referring to the appended figures, an exemplary and non-limiting embodiment of the present invention will be described, wherein:
- figure 1 is a schematic view of an embodiment of a device according to the present invention;
- figure 2 and 3 are detailed views of the components of a device according to the present invention, in two subsequent operation steps according to a first arrangement of the position of the movable fulcrum;
- figure 4 is a detailed view of the device of figures 2 and 3 in a second arrangement of the position of the movable fulcrum;
- figure 5 is a perspective view of some components of the device of figures 2 - 4.

### DETAILED DESCRIPTION OF A PREFERRED EMBODIMENT OF THE PRESENT INVENTION

Referring to the appended figures, a device 10 for synchronizing the tilt of a backrest and of the seat of a chair, comprises a backrest frame 1, a seat frame 4 and a support 2 integral with the base of the chair itself.

These elements are known from the Patent EP2375938 in the name of the Applicant and are not described in detail herein.

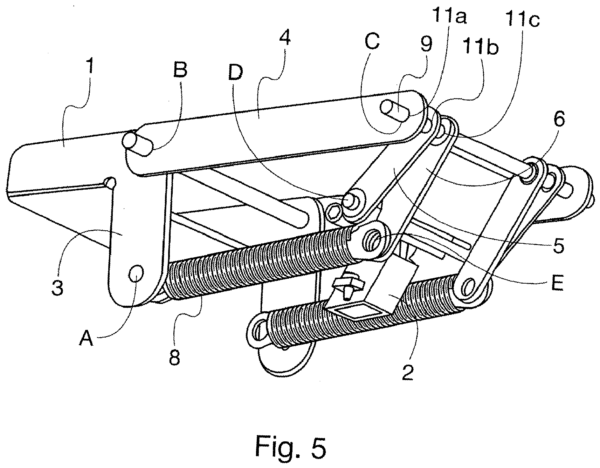

In the following description, for ease of description, when in the chair there is a pair of elements, where the elements of the pair are identical in shape to each other, and arranged parallel with each other, they are individually described. In particular, as shown in figure 5, the chair is provided with two four-bar linkages 3, 4, 5 arranged in parallel, having a respective adjusting lever 6. A single four-bar linkage is described below and, as evident, this description identically applies to the second four-bar linkage. Further, more (or less) identical four-bar linkages can be arranged in parallel in a chair.

Briefly, the backrest frame 1 is constrained to the backrest in a known way and is integral with a first crank 3 rotatably constrained to the support 2. In the shown embodiment, part of the backrest frame is made in one piece with the first crank 3, which is constrained to the support 2 by means of a hinge A.

The seat frame 4 is constrained in a known way to the seat and is rotatably constrained to the first crank 3.

In particular, in the embodiment shown, a hinge B constrains the seat frame 4 to the first crank 3.

A second crank 5 is hinged in the front portion of the seat frame 4 and the support 2. In particular, a hinge D rotatably constrains the second crank 5 to the support 2. The second crank 5 is further constrained to the seat frame 4 by means of a hinge C.

The two cranks 3, 5 and the seat frame 4 form a four-bar linkage, similarly to what described in the Patent EP2375938 in the name of the Applicant.

According to the invention, an adjusting lever 6 is constrained to the four-bar linkage 3,4,5.

The adjusting lever is preferably constrained to one of the shared constraints in the four-bar linkage 3, 4, 5.

Herein, "shared constraints" means constraints interposed between at least two elements of the four-bar linkage 3, 4, 5. Therefore, in the embodiment of the figures, the shared constraints are the hinges B and C.

In the present embodiment, the adjusting lever 6 is constrained to the hinge C, which constrains together the seat frame 4, the second crank 5 and the adjusting lever 6. Also referring to figure 5, in the present embodiment the hinge C is made by a rod 9, acting as a pin, rotatably engaged within respective and preferably circular openings 11a, 11b, 11c of the seat frame 4, the second crank 5 and the lever 6, respectively. Preferably, the opening 11b of the second crank 5 is provided with a bush, not shown, shaped such as to constrain the bar 9 such that the second crank 5 can rotate around the axis of the bar 9 itself.

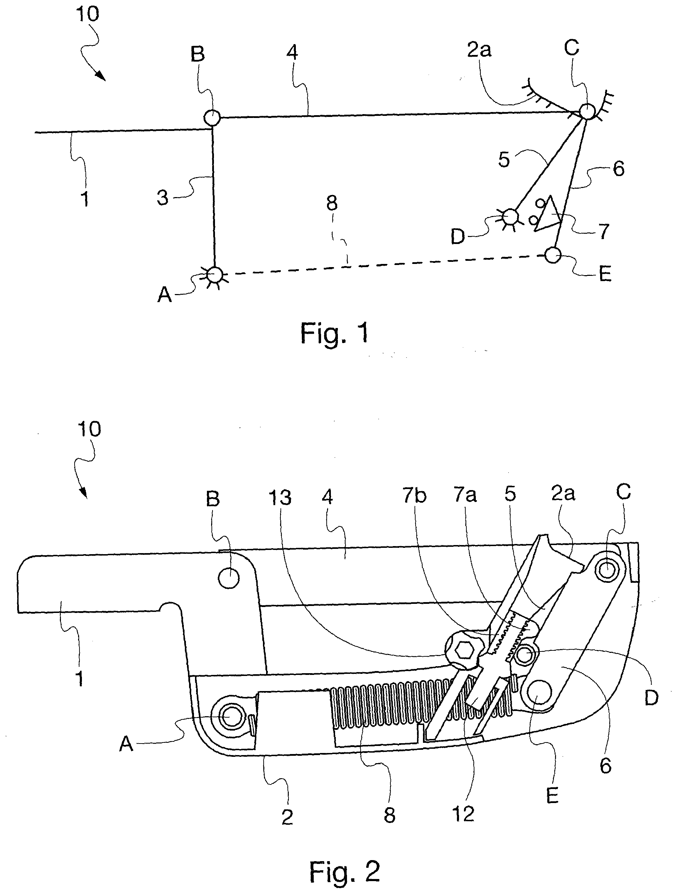

In particular, in the embodiment shown herein, the hinge C is rotationally guided by the second crank 5 around the hinge D. The hinge C, and in particular the bar 9, can be further supported or guided by a supporting profile 2a integral with the support 2. In more detail, the supporting profile 2a acts as a guiding support for the hinge C, in particular when this hinge C is in the rest position, as shown in figure 2. The shape of the supporting profile is selected according to structural requirements, and thus it can change with respect to what shown in figures.

The adjusting lever 6 is constrained to elastic means 8, which are in turn constrained to the support 2.

The elastic means 8 are of a type known in the art. In the shown embodiment they are made by means of a spring, but pneumatic or oleodynamic elastic means are also possible.

For sake of simplicity, in the shown embodiment, the elastic means are constrained to the support 2 by the hinge A. The hinge A is integral with the support 2, so the movement of the first crank 3 is not directly correlated to the elastic means 8 through the hinge A.

In particular, the elastic means 8 could be constrained to another point integral with the frame 2 of the chair.

On the contrary, the elastic means 8 are constrained to the adjusting lever 6, preferably by means of a hinge E, such that the elastic means 8 are directly operated by displacing the adjusting lever 6.

In other words, the displacement of the adjusting lever 6 results in a tensile/compression force of the elastic means 8. Thus, according to the shape of the elastic means 8, the elastic means 8 themselves can selectively help or hinder the movements of the adjusting lever 6.

The adjusting lever 6 rotates around a movable fulcrum 7. Movable fulcrum means an element acting as a pivot for the adjusting lever 6 and able to be firmly positioned in different positions. In particular, the fulcrum 7 is movable at least in an axial direction of the adjusting lever 6 and, generally, at least between a position in which the distance from the elastic means 8 is minimum, and a position in which the distance from the elastic means 8 is maximum.

As better illustrated below in explaining the operation of the device 10, the lever 6 is a first-class lever, in which the movable fulcrum 7 acts as a pivot, the user weight acts as the effort force and the elastic means 8 act as the resistance force.

By changing the position of the movable fulcrum 7, a twofold effect is obtained, whereby the ratio of the lever arms of the effort force and the resistant force changes, such as to accordingly change the lever advantage/disadvantage, as evident to a field technician.

Moreover, by changing the position of the movable fulcrum 7, the adjusting lever 6 is forced to a displacement for finding a new equilibrium state between the forces applied on it.

As mentioned, as a result of this operation, the elastic means 8 are operated so that their preload changes.

In the present embodiment the movable fulcrum 7 has a head 7A for engaging the adjusting lever 6 and a body 7B, being movable with respect to a respective housing 12.

In more detail, the housing 12 and the body 7b are threaded, and the housing 12 is rotatably constrained with respect to the support 2. The rotation of the housing 12 can be controlled through a knob 13. The rotation of the housing 12 causes, in turn, a relative rotation between the threads of the body 7b of the movable fulcrum and the thread of the housing 12 itself. As evident to the field technician, this results in a translatory movement of the body 7b with respect to the housing 12 and therefore a displacement of the movable fulcrum 7.

It is however evident that different kinematic systems can be used to control the displacement of the movable fulcrum, for example by directly engaging a knob thread with a thread of the body 7b.

Referring to the appended figures, the operation of the device 10 will be now introduced.

When a user rests on the chair mounting the device 10, the user weight directly acts on the seat and the backrest.

In particular, the weight of the user resting on the seat applies a downward force to the seat frame 4 and therefore, due to the arrangement of the four-bar linkage 3, 4, 5, causes the cranks 3, 5 to rotate, clockwise in the appended figures.

On the contrary, the weight of the back acting on the backrest causes the backrest frame 1, and accordingly also the first crank 3, to rotate in the opposite direction, i.e. counterclockwise in the appended figures. The constraints in the four-bar linkage 3, 4, 5 also act to raise the seat frame 4, and to rotate also the second crank 5 in the same direction, i.e. counterclockwise in figures.

In general, the user weight acting on the seat frame 4 and the back weight acting on the backrest frame 1 tend to rotate the four-bar linkage in opposite directions, resulting in an unbalance in the direction imposed by the backrest frame 1.

In other words, when a user leans on the backrest, the latter tilts, being braked by the user weight acting on the seat.

To balance the forces acting on the four-bar linkage 3, 4, 5, the elastic means 8 act to help the action of user weight on the backrest frame 1.

In the embodiment illustrated herein, being the hinge C in common between the second crank 5 and the adjusting lever 6, a rotation of the former causes, as a result, the displacement of the latter. In more detail, when the crank 5 rotates, clockwise in figures, due to the weight of the back indirectly acting on the backrest frame 1, the adjusting lever 6, in turn, rotates around the movable pivot 7 in the direction of the crank 5, and thus in counterclockwise direction in figures.

The rotation of the adjusting lever 6 causes the elastic means 8 to be operated.

In the shown embodiment, the rotation of the adjusting lever 6, clockwise in figures, results in a tensile force of the elastic means 8 such that they increasingly counter this movement of the lever 6, which is directed counterclockwise in figures, as mentioned.

When the weight force of the user on the seat frame 4 and the force of the elastic means 8 balance the weight of the user back acting on the backrest frame 1, the backrest stops moving and the user is in a stable position on the chair.

As mentioned, in the absence of further elements, each user, clearly provided with only one weight to be applied on the seat and the backrest, can get only one equilibrium position.

Thanks to the displacement of the movable fulcrum 7, each single user can instead select several equilibrium positions on the chair, and particularly several backrest tilts that are equilibrium positions.

As anticipated, the displacement of the movable fulcrum 7 firstly changes the length of the lever arms, in particular the distance between the head 7A of the fulcrum 7 and the hinge C, that is the position in which the weight forces of the user act on the seat and the backrest, and the distance between the head 7A and the hinge E, that is the position in which resistance force of the elastic means 8 acts.

Secondly, the change of the movable fulcrum 7 causes the preload of the elastic means 8 to change.

Indeed, when the movable fulcrum 7 is brought as close as possible with respect to the elastic means, the preload of the elastic means 8 is different from the position of maximum distance between movable fulcrum 7 and elastic means 8. In particular, according to the configuration of the elastic means 8 and the four-bar linkage 3, 4, 5, these two positions will correspond to the positions of minimum and maximum preload of the elastic means 8.

In the shown embodiment, the position in which the elastic means 8 and the fulcrum 7 are closest, is corresponding to the condition in which the preload on the elastic means 8 is minimum, and vice versa.

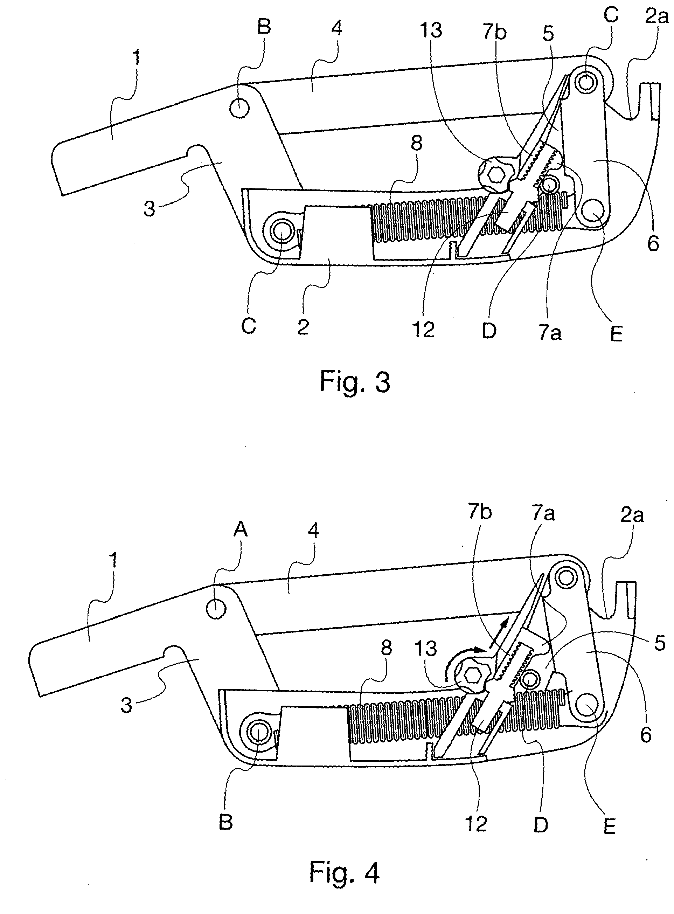

Referring particularly to figures 3 and 4, as can be noted, for two users of different weight there are two positions with the same backrest tilt.

In figure 3, the user kept the movable fulcrum 7 in the closest position with respect to the elastic means 8. As a result of the user resting on the seat and backrest, the cranks 3, 5 rotate from the position of figure 2, in this case counterclockwise, and the hinge C is raised, rotating about the hinge D, until it gets the position of Figure 4, in which the force of the elastic means 8 is balanced by the user action on the seat frame 4 and the backrest frame 3.

On the other hand, in figure 5 it is shown the same equilibrium state of figure 4 but with a user of greater weight with respect to the condition of figure 4.

In particular, due to the user's greater weight, with the same position of the movable fulcrum 7, the equilibrium position of such a user will involve a greater tilt of the backrest frame 1 because, for balancing the weight of the user back a greater resistance force of the elastic means 8 is needed which is provided by a greater rotation of the four-bar linkage 3, 4, 5.

However, this position may be uncomfortable for the user. By operating the knob 13 or a similar control means, the user can translate the movable fulcrum 7, in this case moving the movable fulcrum away from the elastic means 8.

Such a change involves a rotation, counterclockwise in figures, of the adjusting lever 6 and a tensile force of the elastic means 8. Thanks to this, the resistance force of the elastic means 8 increases and they can balance the operation of the user weight in response to a lesser rotation of the four-bar linkage 3, 4, 5.

During the displacement of the movable fulcrum 7, the adjusting lever 6 is rotated around the hinge C which therefore substantially stays still in its position. Accordingly, during the displacement of the fulcrum 7, the four-bar linkage and therefore the positions of the seat frame 4 and the backrest frame 1 do not change, such that this only results in the change of the preload of the elastic means 8.

## Claims

1. Device for synchronizing the tilt of the backrest and of the seat of a chair, of the type comprising a frame (1) of the backrest, a frame (4) of the seat (2) and a support integral with the base of said chair, as well as a first crank (3), integral with said backrest frame, and hinged in the rear portion of said seat frame and said support, and at least one second crank (5) hinged in the front portion of said seat frame (4) and to said support, said at least one first crank (3) and said at least one second crank (5), with said seat frame, forming a four-bar linkage (3, 4, 5), **characterized in that** an adjusting lever (6) is constrained to said four-bar linkage (3, 4, 5), said adjusting leverage (6) being operatively connected to a movable fulcrum (7) and being further constrained to elastic means (8), wherein said fulcrum (7) is movable at least between a first position, in which the distance between said movable fulcrum (7) and said elastic means (8) is maximum, and a second position, in which the distance between said movable fulcrum (7) and said elastic means (8) is minimum.

2. Device according to claim 1, wherein said adjusting lever (6) is hinged to a hinge (C) constraining said second crank (5) and said seat frame (4).

3. Device according to claim 2, wherein said hinge (C) is supported by a supporting profile (2a).

4. Device according to one of the preceding claims, wherein said fulcrum (7) comprises an element sliding with respect to a respective housing, and a head (7A) for engaging said adjusting lever (6).

## Patentansprüche

1. Vorrichtung zum Synchronisieren der Neigung der Rückenlehne und des Sitzes eines Stuhls von der Bauart umfassend einen Rahmen (1) der Rückenlehne, einen Rahmen (4) des Sitzes (2) und eine Halterung, die einstückig mit mit der Basis des Stuhls ausgebildet ist, sowie eine erste Kurbel (3), die einstückig mit dem Rahmen der Rückenlehne ausgebildet ist und im hinteren Abschnitt des Sitzrahmens und der Halterung angelenkt ist, und mindestens eine zweite Kurbel (5), die im vorderen Abschnitt des Sitzrahmens (4) und an der Halterung angelenkt ist, wobei die mindestens eine erste Kurbel (3) und die mindestens eine zweite Kurbel (5) mit dem Sitzrahmen ein Gelenkviereck (3, 4, 5) bilden, **dadurch gekennzeichnet, dass** ein Einstellhebel (6) an dem Gelenkviereck (3, 4, 5) befestigt ist, wobei das Einstellhebelwerk (6) mit einem beweglichen Gelenkpunkt (7) wirkverbunden ist und weiterhin mit elastischen Mitteln (8) verbunden ist, wobei der Drehpunkt (7) mindestens zwischen einer ersten Stellung, in der der Abstand zwischen dem beweglichen Drehpunkt (7) und den elastischen Mitteln (8) maximal ist, und einer zweiten Stellung, in der der Abstand zwischen dem beweglichen Drehpunkt (8) und den elastischen Mitteln (8) minimal ist, bewegbar ist.

2. Vorrichtung gemäß Anspruch 1, wobei der Einstellhebel (6) an einem Gelenk (C) angelenkt ist, das die zweite Kurbel (5) und den Sitzrahmen (4) miteinander verbindet.

3. Vorrichtung gemäß Anspruch 2, wobei das Gelenk (C) von einem Stützprofil (2a) getragen wird.

4. Vorrichtung gemäß irgendeinem der vorhergehenden Ansprüche, wobei der Drehpunkt (7) ein Element aufweist, das in Bezug auf ein entsprechendes Gehäuse gleitet, und einen Kopf (7A) zum Eingriff mit dem Einstellhebel (6) aufweist.

## Revendications

1. Dispositif pour synchroniser l'inclinaison du dossier et du siège d'une chaise, du type comprenant un cadre (1) du dossier, un cadre (4) du siège (2) et un support solidaire de la base de ladite chaise, ainsi qu'une première manivelle (3) solidaire dudit cadre de dossier et articulée à la partie arrière dudit cadre de siège et audit support, et au moins une seconde manivelle (5) articulée à la partie avant dudit cadre de siège (4) et audit support, ladite au moins une première manivelle (3) et ladite au moins une seconde manivelle (5) formant, avec ledit cadre de siège, un quadrilatère articulé (3, 4, 5), **caractérisé en ce qu'**un levier de réglage (6) est contraint par ledit quadrilatère articulé (3, 4, 5), ledit levier de réglage (6) étant relié fonctionnellement à un point d'appui mobile (7) et étant contraint en outre par des moyens élastiques (8), dans lequel ledit point d'appui (7) est mobile au moins entre une première position, dans laquelle la distance entre ledit point d'appui mobile (7) et lesdits moyens élastiques (8) est maximale, et une seconde position, dans laquelle la distance entre ledit point d'appui mobile (7) et lesdits moyens élastiques (8) est minimale.

2. Dispositif selon la revendication 1, dans lequel ledit levier de réglage (6) est articulé à une charnière (C) contraignant ladite seconde manivelle (5) et ledit cadre de siège (4).

3. Dispositif selon la revendication 2, dans lequel ladite charnière (C) s'appuie sur un profilé de support (2a).

4. Dispositif selon l'une des revendications précédentes, dans lequel ledit point d'appui (7) comprend un élément coulissant par rapport à un logement respectif, et une tête (7A) destinée à venir en prise avec ledit levier de réglage (6).
